# EUROPÄISCHE PATENTANMELDUNG

(11) **EP 4 148 315 A1**
(43) Veröffentlichungstag der Anmeldung: **15.03.2023**
(21) Anmeldenummer: 22195430.8
(22) Anmeldetag: 13.09.2022
(51) Int. Cl.: F16L 55/11

(54) **VARIABLER ROHRSTOPFEN ZUM ABDICHTEN VON ROHRLEITUNGEN**

(30) Priorität: 14.09.2021 DE 102021123765
(71) Anmelder: Meijer, René, 44879 Bochum (DE)
(72) Erfinder: Meijer, René, 44879 Bochum (DE)
(74) Vertreter: Bals & Vogel Patentanwälte PartGmbB

(57) **Zusammenfassung**

Die Erfindung betrifft einen Rohrstopfen (1) zum Abdichten von Rohrleitungen (10), insbesondere Abwasserleitungen, wobei der Rohrstopfen einen Dichtkörper (2) zur Herstellung einer Dichtwirkung bei Einführung des Rohrstopfen (1) in eine Rohrleitung (10) sowie ein Griffelement (3) zur vereinfachten Handhabung des Rohrstopfen (1) umfasst. Erfindungsgemäß ist es vorgesehen, dass der Dichtkörper (2) zum Abdichten von zumindest zwei im Rohrdurchmesser unterschiedlichen Rohrleitungen (10), insbesondere direkt verwendbar ist.

Die Erfindung betrifft ebenfalls ein Rohrleitungssystem (100) sowie ein Verfahren (200) zur Verwendung eines erfindungsgemäßen Rohrstopfens (1) mit einer Rohrleitung (10).

## Beschreibung

Die Erfindung betrifft einen Rohrstopfen zum Abdichten von Rohrleitungen mit den Merkmalen des Oberbegriffs des unabhängigen Hauptanspruchs sowie ein Rohrleitungssystem mit den Merkmalen des Oberbegriffs des nebengeordneten Systemanspruchs und ein Verfahren zur Verwendung eines erfindungsgemäßen Rohrstopfens mit den Merkmalen des nebengeordneten Verfahrensanspruchs.

Sowohl beim Neubau als auch bei der Renovierung von Immobilien im gewerblichen und/oder privaten Bereich kommt es häufig zumindest temporär zu freiliegenden Rohrleitungen und/oder Rohrleitungsenden bzw. Rohrleitungsöffnungen. Als Beispiel hierfür sei die Renovierung eines Badezimmers oder Sanitärbereichs genannt. Entsprechend der in Räumlichkeiten dieser Art erforderlichen Wasserversorgung für Waschbecken, WCs, Duschen etc. ist eine Vielzahl von Rohrleitungen, insbesondere Frischwasser- und Abwasserleitungen erforderlich. Die Verlegung dieser Rohrleitungen wird hierbei üblicherweise innerhalb des Bodens und/oder der Wände derart realisiert, dass diese nach Abschluss der Renovierungsarbeiten nicht sichtbar sind. Entsprechend wird in diesem Zusammenhang auch von einer Unterputz-Verlegung gesprochen. Insbesondere die Rohrleitungsenden verbleiben jedoch auch nach dem Verputzen der Wände und/oder etwaiger Fliesenarbeiten zugänglich, um einen späteren Anschluss von Sanitärartikeln bzw. -armaturen realisieren zu können. Der Anschluss der Sanitärartikel bzw. -armaturen wie Waschbecken, Wasserhahn, Toilette, Duschwanne, Badewanne, Bidet etc. an die Frischwasser- und/oder Abwasserleitungen erfolgt üblicherweise erst nach Abschluss der sonstigen Renovierungsarbeiten wie beispielsweise Maurerarbeiten, Trockenbauarbeiten oder Malerarbeiten, damit es im Zuge der Renovierung nicht zu einer Beschädigung der meist kostspieligen Sanitärartikel bzw. -armaturen kommt. Der bei den Renovierungsarbeiten anfallende Staub und/oder Schmutz und/oder Bauschutt kann somit über die freiliegenden Enden in die Rohrleitungen eingetragen werden und diese verschmutzen und/oder verstopfen. Dieses Problem betrifft insbesondere die freiliegenden Enden von Abwasserleitungen, da diese zum einen über einen verhältnismäßig großen Durchmesser (insbesondere zwischen 40 mm und 100 mm) verfügen sowie darüber hinaus nicht mit Druck beaufschlagt sind und somit nicht zwangsläufig verschlossen werden müssen. Eine Verschmutzung und/oder Verstopfung der Rohrleitungen kann jedoch aufwändige Reinigungs- und Wartungsarbeiten erforderlich machen, um einen ordnungsgemäßen Abfluss des anfallenden Abwassers gewährleisten zu können. Ein weiteres Problem ergibt sich insbesondere bei der Freilegung bestehender Abwasserleitungen, durch einen Austritt störende Gerüche aus freiliegenden Rohrleitungsöffnungen. Der Austritt dieser Gerüche wird im Normalbetrieb durch den Anschluss eines Siphons verhindert, welcher im Zuge von Umbau und/oder Renovierungsarbeiten jedoch üblicherweise entfernt werden muss.

Um den Eintrag von Schmutz und/oder Staub und/oder Bauschutt in freiliegende Rohrleitungsenden bzw. den Austritt störender Gerüche aus ebendiesen zu vermeiden, werden auf Baustellen häufig provisorische Verschlussmittel wie Altpapier, Haushaltspapier oder Textilien wie Lappen, Aufnehmer oder dergleichen verwendet. Diese werden in das freiliegende und unverschlossene Ende einer Rohrleitung eingeführt und sollen somit sowohl den Eintrag von unerwünschten Fremdstoffen in die Rohrleitung als auch den Austritt störender Gerüche aus der Rohrleitung vermeiden. Hierbei hat es sich als problematisch erwiesen, dass diese provisorischen Verschlussmittel die Rohrleitungsöffnung meist nicht vollständig gegenüber der Umgebung abdichten und somit auch nach Einführung eines solchen Verschlussmittels in die Rohrleitung ein Eintrag unerwünschter Fremdstoffe in die Rohrleitung sowie ein Austritt störender Gerüche aus der Rohrleitung möglich ist. Ein weiterer Nachteil ergibt sich daraus, dass die provisorischen Verschlussmittel oft vollständig in die Rohrleitung eingeführt werden und nicht gegen eins nachträgliche Positionsveränderung innerhalb der Rohrleitung gesichert werden. Es besteht somit die Gefahr, es durch Vibrationen oder äußere Krafteinwirkung zu einer derartigen Positionsveränderung des provisorischen Verschlussmittels innerhalb der Rohrleitung kommt, dass es von außen nicht mehr zugänglich ist und somit eine zumindest teilweise Verstopfung der Rohrleitung durch das Verschlussmittel selbst erfolgt. Auch ist es aufgrund der Tatsache, dass in den meisten Sanitärbereichen mehrere Abwasserleitungen mit unterschiedlichen Durchmessern verbaut sind problematisch, jeweils passende provisorische Verschlussmittel ausfindig zu machen.

Es ist daher Aufgabe der vorliegenden Erfindung zumindest einen der voranstehend beschriebenen Nachteile wenigstens teilweise zu überwinden. Insbesondere ist es Aufgabe der Erfindung freiliegende Enden von, insbesondere geometrisch unterschiedlich ausgestalteten Rohrleitungen, insbesondere Abwasserleitungen, zuverlässig vor dem Eintrag von Schmutz und/oder Staub und/oder Bauschutt (vorzugsweise ohne einen Umbau des Stopfens) zu schützen sowie den Austritt störender Gerüche aus ebendiesen zu vermeiden. Es ist eine weitere Aufgabe der Erfindung dies in besonders einfacher, umweltfreundlichen und benutzerfreundlicher Weise für unterschiedliche Rohrdurchmesser gewährleisten zu können.

Die voranstehende Aufgabe wird gelöst durch einen Rohrstopfen mit den Merkmalen des Hauptanspruchs, ein Rohrleitungssystem mit den Merkmalen des unabhängigen Systemanspruch sowie ein Verfahren mit den Merkmalen des unabhängigen Verfahrensanspruchs. Weitere Merkmale und Details der Erfindung ergeben sich aus den Unteransprüchen, der Beschreibung und den Zeichnungen. Dabei gelten Merkmale und Details die im Zusammenhang mit dem erfindungsgemäßen Rohrstopfen beschrieben sind, selbstverständlich auch im Zusammenhang mit dem erfindungsgemäßen Rohrleitungssystem und/oder Verfahren zur Verwendung eines erfindungsgemäßen Rohrstopfens mit einer Rohrleitung und jeweils umgekehrt, so dass bezüglich der Offenbarung zu den einzelnen Erfindungsaspekten stets wechselseitig Bezug genommen wird bzw. werden kann.

In den nachfolgenden Erläuterungen wird auf unterschiedliche Flächen des Rohrstopfens und/oder der Rohrleitung und/oder des Rohrleitungssystems sowie auf deren räumliche Orientierung zueinander Bezug genommen. Im Rahmen dieser Anmeldung sollen in diesem Zusammenhang die nachfolgend beschriebenen Definitionen gelten. Der Einfachheit halber beziehen sich die nachfolgenden geometrischen Definitionen auf Rohrleitungen mit einem rotationssymmetrischen Querschnitt, sind jedoch mutatis mutandis auf andere Querschnittsformen wie bspw. rechteckige oder quadratische Querschnitte übertragbar. Eine Rohrleitung verfügt im Sinne der vorliegenden Anmeldung über eine Längserstreckung, welche nachfolgend aus Gründen der Vereinfachung idealisiert ausschließlich entlang einer axialen Richtung angenommen wird. Auf die Beschreibung und/oder Darstellung von Bögen und/oder Windungen einer Rohrleitung wird somit nachfolgend bewusst verzichtet, ohne dass die nachfolgenden Ausführungen ihre Gültigkeit hierfür verlieren. Es wird definiert, dass die Rohrleitung über eine Mittelachse verfügt. Der Verlauf dieser Mittelachse wird durch die Flächenmittelpunkte aller Querschnittsebenen der Rohrleitung gebildet. Die Mittelachse der Rohrleitung verläuft somit entlang der Längserstreckung der Rohrleitung und schneidet die Flächenmittelpunkte aller denkbaren Querschnittsebenen. Eine Querschnittsebene ist hierbei eine Schnittebene durch die Rohrleitung an einer spezifischen axialen Position, also an einer bestimmten Position entlang der Längserstreckung der Rohrleitung, welche orthogonal zu der axialen Richtung, also zur Längserstreckung der Rohrleitung und somit auch orthogonal zu der Mittelachse ausgerichtet ist. Die Draufsicht auf eine Querschnittsebene beinhaltet somit die Querschnittsgeometrie der Rohrleitung mit einer über den gesamten Umfang der Rohrleitung verlaufenden Innen- und Außenkontur der Rohrleitung. Die Außenfläche einer Rohrleitung ergibt sich als Aneinanderreihung der Außenkonturen aller denkbaren Querschnittsflächen entlang der Mittelachse und erstreckt sich somit entlang der Mittelachse. Die Innenfläche einer Rohrleitung ergibt sich als Aneinanderreihung der Innenkonturen aller denkbaren Querschnittsebenen entlang der Mittelachse und erstreckt sich somit entlang der Mittelachse. In Bezug auf eine Beschreibung des Rohrleitungsquerschnitts in Polarkoordinaten, bildet die Differenz der Radialkoordinaten von Außenkontur und Innenkontur der Rohrleitung an einer definierten Position auf dem Umfang der Rohrleitung (also für eine spezifische Umfangskoordinate) die Materialstärke der Rohrleitung ab. Diese kann über den Umfang der Rohrleitung konstant sein oder auch variieren, wobei nachfolgend vereinfacht von einer konstanten Materialstärke ausgegangen wird. Die durch die Außenkontur und Innenkontur eingeschlossene Fläche ist die Querschnittsfläche der Rohrleitung. Diese ist gemäß der Ausrichtung der Querschnittsebene ebenfalls orthogonal zur Mittelachse ausgerichtet und verfügt über eine Erstreckung in radialer Richtung (Materialstärke) sowie über eine Erstreckung in Umfangsrichtung. Natürlich sind diese Überlegungen gleichwohl auf nicht rotationssymmetrische Querschnitte wie bspw. rechteckige bzw. im Wesentlichen rechteckige oder quadratische bzw. im Wesentlichen quadratische Querschnitte übertragbar, wobei die oben beschriebenen Aspekte unter der Verwendung von kartesischen Koordinaten mutatis mutandis gelten.

Erfindungsgemäß ist ein Rohrstopfen zum Abdichten von bevorzugt rotationssymmetrischen Rohrleitungen, insbesondere Abwasserleitungen vorgesehen. Der Rohrstopfen, auch Abwasserrohrstopfen genannt, umfasst hierbei einen Dichtkörper zur Herstellung einer Dichtwirkung bei Einführung des Rohrstopfens in eine Rohrleitung sowie ein Griffelement zur vereinfachten Handhabung des Rohrstopfens und ist zum Abdichten von zumindest zwei im Rohrdurchmesser unterschiedlichen Rohrleitungen, insbesondere direkt verwendbar. In anderen Worten kann der erfindungsgemäße Rohrstopfen, ohne dass ein zumindest teilweiser Umbau oder eine zumindest abschnittsweise geometrische Veränderung des Rohrstopfens erforderlich ist, sowohl für die Abdichtung zumindest einer ersten Rohrleitung mit einem ersten Rohrdurchmesser als auch für die Abdichtung zumindest einer zweiten Rohrleitung mit einem zweiten Rohrdurchmesser verwendet werden, wobei der erste Rohrdurchmesser von dem zweiten Rohrdurchmesser verschieden ist und es sich bei der ersten Rohrleitung und/oder der zweiten Rohrleitung insbesondere um eine Abwasserleitung (im Hausbau) handelt. Hierdurch ergibt sich der Vorteil, dass ein einziger Stopfen flexibel für vielfältige Anwendungen verwendet werden kann und eine Anschaffung mehrerer Stopfen die jeweils nur für spezifische Anwendungen (also eine spezielle Rohrleitung) geeignet sind, vermieden werden kann. Die durch den Rohrstopfen bereitgestellte Dichtwirkung ist hierbei unabhängig vom Rohrdurchmesser stets von der gleichen Qualität.

Erfindungsgemäß ist weiterhin ein Rohrstopfen zum Abdichten von bevorzugt rotationssymmetrischen Rohrleitungen, insbesondere Abwasserleitungen vorgesehen, wobei der Rohrstopfen einen Dichtkörper zur Herstellung einer Dichtwirkung bei Einführung des Rohrstopfens in eine Rohrleitung sowie ein Griffelement zur vereinfachten Handhabung des Rohrstopfens umfasst. Der Dichtkörper des Rohrstopfens umfasst dabei wenigstens zwei bevorzugt rotationssymmetrische Abschnittselemente, wobei der Außendurchmesser und/oder insbesondere äußere Umfang des ersten Abschnittselements größer ist als der Durchmesser und/oder insbesondere äußere Umfang des zweiten Abschnittselements und wobei sich das bezogen auf den Durchmesser und/oder insbesondere äußeren Umfang der Abschnittselemente größte Abschnittselement am wenigstens beabstandet von dem Griffelement befindet und wobei alle Abschnittselemente, ausgehend von dem größten Abschnittselement, in einer bezogen auf den Durchmesser und/oder insbesondere äußeren Umfang der Abschnittselemente absteigenden Reihenfolge angeordnet sind.

Durch den Dichtkörper des Rohrstopfens wird erfindungsgemäß eine Dichtwirkung zwischen dem Rohrstopfen und der Rohrleitung hergestellt, wenn der Rohrstopfen in eine Rohrleitung eingeführt wird und/oder ist, wodurch sowohl der Eintrag von Staub und/oder Schmutz und/oder Bauschutt in die Rohrleitung als auch der Austritt störender Gerüche aus der Rohrleitung verhindert wird. Hierzu steht der Dichtkörper insbesondere vollumfänglich in Kontakt mit einer Innenfläche und/oder einer Außenfläche und/oder einer Querschnittsfläche der Rohrleitung um eine möglichst gute Dichtwirkung zu ermöglichen.

Zur Erzielung einer möglichst guten Dichtwirkung bei rotationssymmetrischen Rohrleitungen ist der Dichtkörper des Rohrstopfens bevorzugt zumindest abschnittsweise ebenfalls rotationssymmetrisch ausgeführt. Insbesondere kann es hierbei vorgesehen sein, dass der der Dichtkörper des Rohrstopfens bei einer Einführung in eine Rohrleitung in Bezug auf seine Mittelachse koaxial mit der Mittelachse Rohrleitung ausgerichtet ist. Die Mittelachse des Dichtkörpers verbindet vorzugsweise alle Flächenmittelpunkte und/oder die Schwerpunkte aller Abschnittselemente. Die Mittelachse des Dichtkörpers verläuft somit vorzugsweise linear und bildet im Falle eines rotationssymmetrischen Dichtkörpers auch die Rotationsachse des Dichtkörpers. Auch andere geometrische Ausführungsformen, wie eine quadratische oder rechteckige Ausführung des Rohrstopfens und/oder des Dichtkörpers des Rohrstopfens und/oder einzelner Abschnittselemente des Rohrstopfens sowie der Rohrleitung sind im Rahmen der Erfindung denkbar. Insbesondere ist es denkbar, dass der Rohrstopfen, insbesondere der Dichtkörper des Rohrstopfens in seiner geometrischen Ausgestaltung derart ausgeführt ist, dass der Dichtkörper des Rohrstopfens zumindest abschnittsweise insbesondere vollumfänglich mit einer Innenwand einer Rohrleitung in Kontakt gebracht werden kann und somit die Rohrleitung fluiddicht verschließen kann. In anderen Worten kann es erfindungsgemäß vorgesehen sein, dass der Rohrstopfen, insbesondere der Dichtkörper des Rohrstopfens zumindest abschnittsweise geometrisch komplementär zu einer Rohrleitung bzw. zum Querschnitt einer Rohrleitung ausgeführt ist. Somit können aus der Rohrleitung austretende Gase und Gerüche zuverlässig vermieden werden.

Es kann im Rahmen der Erfindung vorgesehen sein, dass die wenigstens zwei Abschnittselemente des Rohrstopfens Scheibenförmig ausgebildet sind und über einen insbesondere konstanten Durchmesser verfügen. Eine insbesondere in Bezug auf ihre Mittelachse koaxiale Aneinanderreihung mehrerer Abschnittselemente mit unterschiedlichen Durchmessern führt somit zu einem treppenförmigen Querschnitt des Dichtkörpers des Rohrstopfens.

Ebenfalls ist es im Rahmen der Erfindung denkbar, dass der Durchmesser der Abschnittselemente entlang einer Mittelachse der Abschnittselemente zumindest abschnittsweise variiert. Insbesondere kann der Durchmesser eines Abschnittselements entlang der Mittelachse des Abschnittselements zunehmen oder abnehmen. Hierbei kann es vorgesehen sein, dass zwei insbesondere benachbarte Abschnittselemente des Dichtkörpers an wenigstens einer Position entlang ihrer Mittelachse einen ähnlichen oder gleichen Durchmesser aufweisen. Es kann vorgesehen sein, dass wenigstens zwei Abschnittselemente des Dichtkörpers derart angeordnet sind, dass die Abschnitte ähnlichen oder gleichen Durchmessers bevorzugt unmittelbar benachbart zueinander angeordnet sind. Eine insbesondere in Bezug auf ihre Mittelachse koaxiale Aneinanderreihung mehrerer Abschnittselemente mit unterschiedlichen Durchmessern führt somit zu einer kontinuierlichen oder im Wesentlichen kontinuierlichen, Außenkontur, da die Außenkontur wenigstens eines Abschnittselements kontinuierlich in die Außenkontur wenigstens eines anderen Abschnittselements übergeht. In anderen Worten entsteht eine Außenkontur des Dichtkörpers des Rohrstopfens die, anders als bei einem treppenförmigen Querschnitt, keine oder keine wesentlichen Sprünge aufweist. So kann für den Dichtkörper des Rohrstopfens eine Kegel- oder Kegelstumpfförmige Form realisiert werden.

Durch das Griffelement des Rohrstopfens ergibt sich für den Benutzer eine einfache und komfortable Handhabung des Rohrstopfens. Hierbei kann es im Rahmen der Erfindung vorgesehen sein, dass auch wenn der Rohrstopfen derart in eine Rohrleitung eingeführt wurde, dass eine gewünschte Dichtwirkung hergestellt wurde, das Griffelement des Rohrstopfens zumindest teilweise, bevorzugt vollständig außerhalb der Rohrleitung verbleibt. Hierdurch wird der Vorteil erzielt, dass das Griffelement für einen Benutzer stets gut erreichbar und zugänglich bleibt. Somit kann der Rohrstopfen einfach und unproblematisch von dem Benutzer in die Rohrleitung eingeführt und/oder aus dieser entfernt werden.

Eine vorteilhafte Weiterbildung der Erfindung kann darin liegen, dass der Rohrstopfen wenigstens ein Abschnittselement umfasst, welches in Bezug auf seinen Durchmesser und/oder seinen insbesondere äußeren Umfang zumindest abschnittsweise größer ist als der Durchmesser und/oder der insbesondere äußere Umfang der Rohrleitungsöffnung, in welche der Rohrstopfen eingeführt ist bzw. eingeführt werden soll, um diese besonders effektiv gegenüber äußeren Einflüssen bzw. der Umgebung abzudichten. Somit kann dieses wenigstens eine Abschnittselement nicht in das Innere der Rohrleitung eingeführt werden, sondern kann beim Erreichen einer maximalen Einschubtiefe des Rohrstopfens mit einem Anlageabschnitt des Abschnittselements auf der Rohrleitung, insbesondere auf dem Rand bzw. einer Querschnittsfläche der Rohrleitung zum Aufliegen kommen. Die Querschnittsfläche der Rohrleitung kann auch eine Fläche am Anfang und/oder Ende der Rohrleitung sein. Hierdurch wird der Vorteil erzielt, dass die Einschubtiefe des Rohrstopfens in Bezug auf die Rohrleitung in die der Rohrstopfen eingeführt wird durch die geometrische Ausgestaltung des Rohrstopfens begrenzt ist. Ein Abrutschen des Rohrstopfens in die Rohrleitung oder ein unnötig tiefer Einschub durch einen Benutzer wird somit vermieden.

Der Anlageabschnitt kann bevorzugt durch eine Außenfläche des Abschnittselements ausgebildet werden. Hierzu kann der Anlageabschnitt geometrisch zumindest abschnittsweise derart ausgestaltet sein, dass er bei einer Einführung des Stopfens in die Rohrleitung zumindest abschnittsweise orthogonal zu wenigstens einer Außenfläche und/oder Innenfläche der Rohrleitung ausgerichtet ist und/oder zumindest abschnittsweise parallel zu einer Querschnittsfläche der Rohrleitung ausgerichtet ist. Hierdurch entsteht der Vorteil einer möglichst großflächigen Auflage des Anlageabschnitts auf der Rohrleitung, insbesondere auf einer Querschnittsfläche der Rohrleitung. Hierbei kann es bevorzugt vorgesehen sein, dass der Anlageabschnitt zumindest abschnittsweise, insbesondere vollumfänglich eine Erstreckung in radialer Richtung aufweist, die größer ist als die radiale Erstreckung der Querschnittsfläche der Rohrleitung (also die Materialstärke der Rohrleitung), sodass bei einer Auflage des Anlageabschnitts auf einer Querschnittsfläche der Rohrleitung, die Querschnittsfläche der Rohrleitung insbesondere vollständig mit dem Anlageabschnitt des Abschnittselements des Rohrstopfens in Kontakt steht. Jedes Abschnittselement kann einen Anlageabschnitt ausbilden.

Weiterhin ist es im Rahmen der Erfindung denkbar, dass der Anlageabschnitt wenigstens eine Ausnehmung insbesondere in Form einer Nut aufweist, um einen Rohrleitungsabschnitt bei ausreichend weitem Einschub des Stopfens in die Rohrleitung in dieser Ausnehmung aufzunehmen. Bevorzugt ist die Ausnehmung in ihren Dimensionen, insbesondere hinsichtlich Durchmesser und/oder Stärke und/oder Tiefe und/oder Umfang, an die Rohrleitung bzw. die Querschnittsfläche der Rohrleitung angepasst. In anderen Worten sollte die Ausnehmung derart ausgestaltet sein, dass die Rohrleitung zumindest abschnittsweise insbesondere formschlüssig und/oder kraftschlüssig in dieser aufgenommen werden kann. Hierdurch ergibt sich der Vorteil einer präzisen Positionierung des Stopfens in der Rohrleitung und einer erhöhten Dichtwirkung. Ebenfalls ist es denkbar, dass der Anlageabschnitt mehrere dieser Ausnehmungen aufweist, die sich in ihren Dimensionen, insbesondere hinsichtlich ihres Durchmessers und/oder insbesondere äußeren bzw. inneren Umfangs und/oder ihrer Stärke und/ oder Tiefe unterscheiden. Hierdurch ergeben sich die o. g. Vorteile mit dem Zusatz, dass der wenigstens eine Anlageabschnitt für unterschiedliche Rohrdurchmesser und/oder -wandstärken verwendbar ist.

Es kann im Rahmen der Erfindung vorgesehen sein, dass wenigstens ein Abschnittselement des Dichtkörpers derart ausgebildet ist, dass bei einem Einschub des Rohrstopfens in eine Rohrleitung ein Dichtabschnitt des Abschnittselements insbesondere vollumfänglich in Kontakt mit einer Innenfläche der Rohrleitung bringbar ist. Zwischen dem Dichtabschnitt und der Innenfläche der Rohrleitung kann hierbei ein linienförmiger oder ein flächiger Kontakt bestehen. Durch einen flächigen Kontakt ergibt sich der Vorteil einer erhöhten Dichtwirkung. Durch einen Linienförmigen Kontakt ergibt sich der Vorteil eines vereinfachten Einschubs des Rohrstopfens in die Rohrleitung. Der Dichtabschnitt des Abschnittselements kann bevorzugt durch eine Außenfläche des Abschnittselements gebildet, welche bei Einschub des Rohrstopfens in die Rohrleitung zumindest abschnittsweise parallel oder im Wesentlichen parallel zu einer Innenfläche der Rohrleitung ausgerichtet ist. Insbesondere ist es auch denkbar, dass der Dichtabschnitt eines Abschnittselements zumindest abschnittsweise orthogonal zu dem Anlageabschnitt eines anderen Abschnittselements ausgerichtet ist. Jedes Abschnittselement kann einen Dichtabschnitt ausbilden.

Auch ist es vorteilhafterweise denkbar, dass das in Bezug auf den Durchmesser und/oder insbesondere äußeren Umfang der Abschnittselemente größte Abschnittselement als ein Grundplattenelement ausgestaltet ist. Kennzeichnend für ein Grundplattenelement ist, dass das Grundplattenelement bei einem Einschub des Rohrstopfens in eine Rohrleitung mindestens auf einem bevorzugt parallel zur Querschnittsfläche der Rohrleitung ausgerichteten Abschnitt mit wenigstens einer Fläche der Rohrleitung zumindest abschnittsweise in Kontakt steht. Das Grundplattenelement des Dichtkörpers ist bevorzugt unmittelbar benachbart zu dem Griffelement des Rohrstopfens angeordnet und mit diesem kraftschlüssig und/oder formschlüssig und/oder stoffschlüssig verbindbar ist. Auch ist es denkbar, dass das Griffelement und das Grundplattenelement ein gemeinsames monolithisches, insbesondere materialeinheitliches Bauteil bilden, wodurch sich der Vorteil ergibt, dass sich das Griffelement nicht ungewollt vom Grundplattenelement und somit vom Dichtkörper lösen kann. Ebenfalls ist es denkbar, dass an wenigstens einer Seite des Grundplattenelements bevorzugt mittig ein Innengewinde oder ein Außengewinde zur Herstellung einer form- und/oder kraftschlüssigen Verbindung mit dem Griffelement ausgebildet ist. Hierdurch ergibt sich der Vorteil, dass Grundplattenelement und Griffelement nach Bedarf voneinander getrennt bzw. aneinander befestigt werden können und somit eine platzsparende Unterbringung des Rohrstopfens bzw. des Grundplattenelements und/oder Dichtkörpers ermöglicht wird. Das Grundplattenelement kann weiterhin eine Befestigungsvorrichtung zur Herstellung einer formschlüssigen und/oder kraftschlüssigen Verbindung zwischen dem Grundplattenelement und einem weiteren Abschnittselement umfassen, welche vorzugsweise an einer von dem Griffelement abgewandten Seite des Grundplattenelements angeordnet ist. Die Befestigungsvorrichtung kann ein Innengewinde, ein Außengewinde oder eine Vorrichtung zu Herstellung einer Schnappverbindung bzw. Clipsverbindung mit einem weiteren Abschnittselement sein, wobei es sich bei der Aufzählung nicht um eine abgeschlossene Liste handelt. Hieraus ergibt sich der Vorteil, dass der Rohrstopfen stets passend für einen bestimmten Rohrdurchmesser aus dem Griffelement, einem Grundplattenelement sowie wenigstens einem Abschnittselement modular zusammengesetzt werden kann, wodurch eine hohe Flexibilität in der Anwendung des Rohrstopfens besteht. Das Grundplattelement wird hierbei bevorzugt derart ausgewählt, dass sein Durchmesser und/oder äußere Umfang größer ist als der Durchmesser und/oder insbesondere äußere Umfang der Rohrleitung und das Grundplattenelement somit einen Anlageabschnitt zur Auflage auf der Rohrleitung ausbildet. Das wenigstens eine weitere Abschnittselement wird hingegen derart ausgewählt, dass es bei Einschub in die Rohrleitung ein unmittelbarer oder mittelbarer insbesondere vollumfänglicher Kontakt zwischen dem Abschnittselement und einer Innenfläche, bevorzugt über einen Dichtabschnitt des Abschnittelements herstellbar ist. Ein mittelbarer Kontakt zwischen Abschnittselement und Rohrleitung liegt dann vor, wenn der Kontakt zwischen Abschnittselement und Rohrleitung nicht unmittelbar über eine Fläche des Abschnittselements bzw. einen Dichtabschnitt des Abschnittselements hergestellt wird, sondern über ein zusätzliches, an der Rohrleitung und/oder dem Abschnittselement angeordneten Dichtmittel. Ein Dichtmittel kann ein Dichtring, insbesondere O-Ring, ein Dichtband oder eine Dichtlamelle sein, wobei es sich bei der Aufzählung nicht um eine abgeschlossene Liste handelt. Es kann im Rahmen der Erfindung vorgesehen sein, dass ein Griffelement und ein Grundplattenelement und/oder ein Grundplattenelement und wenigstens ein Abschnittselement ein monolithisches, und/oder zumindest abschnittsweise materialeinheitliches Bauteil bilden. Es kann weiterhin vorgesehen sein, dass das Grundplattenelement aus einem von wenigstens einem anderen Abschnittselement verschiedenen Material hergestellt ist. Das Grundplattenelement kann aus einem Kunststoff, insbesondere einem Thermoplast, bevorzugt Polypropylen (PE) hergestellt sein, wodurch sich der Vorteil einer günstigen Fertigung und hoher Robustheit ergibt.

Ebenfalls kann im Rahmen der Erfindung es vorgesehen sein, dass wenigstens zwei, insbesondere alle Abschnittselemente bevorzugt in Bezug auf ihre Mittelachse koaxial angeordnet sind. Hierdurch ergibt sich der Vorteil, dass bei einer Einführung des Rohrstopfens in die Rohrleitung auch die Mittelachse des Dichtkörpers und die Mittelachse der Rohrleitung koaxial ausgebildet sind, wodurch zumindest ein Abschnittselement, insbesondere zwei Abschnittselemente bevorzugt vollumfänglich mit der Rohrleitung in Kontakt bringbar sind. In anderen Worten ist es möglich sowohl einen Dichtabschnitt eines Abschnittselements als auch einen Anlageabschnitt eines anderen Abschnittselements insbesondere vollumfänglich mit der Rohrleitung, insbesondere einer Innenfläche und/oder Außenfläche und/oder Querschnittsfläche der Rohrleitung in Kontakt zu bringen.

Im Rahmen der Erfindung ist es auch denkbar, dass wenigstens ein Abschnittselement, insbesondere alle Abschnittselemente jeweils mit wenigstens einem, insbesondere zwei anderen Abschnittselement formschlüssig und/oder kraftschlüssig, insbesondere reversibel verbunden sind. Hierdurch ergibt sich der Vorteil, dass der Dichtkörper des Rohrstopfens bedarfsgerecht und modular für einen spezifischen Anwendungsfall zusammengesetzt werden kann. Beispielsweise kann der Dichtkörper derart gestaltet werden, dass er für die Abdichtung zweier verschiedener Rohrdurchmesser geeignet ist, von denen bekannt ist, dass sie auf einer Baustelle Verwendung finden. Auf die Verwendung von zusätzlichen, unpassenden Abschnittselementen zur Verwendung mit anderen Rohrdurchmessern kann verzichtet werden. Entsprechend ergibt sich ein möglichst geringes Gewicht des Rohrstopfens für einen spezifischen Anwendungsfall, was die Handhabung vereinfacht. Auch wird die Verschmutzung von Abschnittselementen, die ohnehin keine Verwendung finden vermieden.

Auch kann es erfindungsgemäß vorgesehen sein, dass wenigstens zwei, insbesondere alle Abschnittselemente stoffschlüssig miteinander verbunden sind und/oder ein monolithisches, insbesondere materialeinheitliches Bauteil bilden. Hierdurch ergibt sich der Vorteil, dass der Rohrstopfen direkt und ohne die Durchführung einer vorherigen Montage für eine Abdichtung von Rohrleitungen unterschiedlicher Durchmesser verwendet werden kann. Auch wird durch eine stoffschlüssige Verbindung und/oder monolithische, insbesondere materialeinheitliche Ausführung mehrerer Abschnittselemente die Anzahl der Einzelteile reduziert sowie ein Verlustrisiko für einzelne Komponenten des Rohrstopfens reduziert.

Ebenfalls ist es im Rahmen der Erfindung denkbar, dass wenigstens zwei Abschnittselemente, insbesondere alle Abschnittselemente eine teleskopartige Struktur bilden. In anderen Worten ist es denkbar, dass der Dichtkörper aus wenigstens zwei, Abschnittselementen mit unterschiedlichem Durchmesser und/oder äußerem Umfang besteht und diese Abschnittselemente ein monolithisches Bauteil bilden, wobei die einzelnen Abschnittselemente ineinander hinein und auseinander heraus verschiebbar sind. Insbesondere erfolgt die Verschiebung derart, dass in einem zusammengeschobenen Zustand des Dichtkörpers alle Abschnittselemente, bis auf das in Bezug auf Durchmesser und/oder Umfang größte Abschnittselements, innerhalb eines anderen insbesondere größeren, bevorzugt innerhalb des nächstgrößeren Abschnittselements angeordnet sind. So lässt sich der gesamte Dichtkörper teleskopartig ein- und ausfahren, wobei wenn der Dichtkörper eingefahren insbesondere ist alle Abschnittselemente koaxial und konzentrisch ineinander angeordnet sind und wenn der Dichtkörper ausgefahren ist sich die Abschnittselemente insbesondere nicht überschneiden und koaxial nebeneinander angeordnet sind. Hierdurch ergibt sich der Vorteil, dass der Dichtkörper des Rohrstopfens insbesondere zum Zwecke des Transports und/oder der Aufbewahrung verkleinert werden kann.

Auch ist es erfindungsgemäß möglich, dass wenigstens ein Abschnittselement aus einem anderen Werkstoff, insbesondere Kunststoff hergestellt ist als wenigstens ein anderes Abschnittselement des Dichtkörpers. In diesem Zusammenhang ist es denkbar, dass der Dichtkörper zumindest abschnittsweise als Mehrkomponenten-Spritzgussteil hergestellt ist. Hierdurch ergibt sich der Vorteil, dass einzelne Abschnitt des Dichtkörpers aus unterschiedlichen Kunststoffen mit unterschiedlichen Werkstoffeigenschaften hergestellt werden können. So ist es denkbar, dass im Bereich der Anlageabschnitt der Abschnittselemente ein harter Kunststoff zum Einsatz kommt, während im Bereich der Dichtabschnitt ein weicherer, insbesondere elastischer und stauchungsfähiger Kunststoff verwendet wird. Hierdurch ergibt sich eine hohe Stabilität des Dichtkörpers bei gleichzeitig optimaler Dichtwirkung im Bereich der Dichtabschnitte.

Im Rahmen der Erfindung ist es ferner denkbar, dass an wenigstens einem Abschnittselement wenigstens ein Dichtmittel, vorzugsweise ein Dichtring, Dichtband oder eine Dichtlamelle angeordnet ist. Hierdurch ergibt sich der Vorteil einer hohen Dichtwirkung des Rohrstopfens. Außerdem kann bei nachlassender Dichtwirkung, aufgrund eines zunehmenden Verschleißes des Dichtmittels, eine einfache und kostengünstige Erneuerung des Dichtmittels vorgenommen werden. Das Dichtmittel kann bevorzugt als Dichtring, insbesondere O-Ring ausgeführt sein. Hierdurch ergibt sich der Vorteil, einer kostengünstigen Anschaffung. Das Dichtmittel kann bevorzugt zumindest abschnittsweise aus einem Elastomer, Gummi oder Kautschuk hergestellt sein. Hierdurch ergibt sich der Vorteil einer hohen Dichtwirkung, wobei gleichzeitig Bauteiltoleranzen durch die Flexibilität und Stauchfähigkeit des Werkstoffs ausgeglichen werden können. Ebenfalls denkbar ist die Verwendung von Dichtmitteln aus Kunststoff, insbesondere Teflon (PTFE), wodurch sich der Vorteil eines einfachen Einschubs des Rohrstopfens in die Rohrleitung ergibt, wenn das Dichtmittel an der Innenfläche der Rohrleitung abgleitet. Es kann im Rahmen der Erfindung vorgesehen sein, dass an wenigstens einem Abschnittselement eine Ausnehmung oder Nut vorgesehen ist, insbesondere zur formschlüssigen und/oder kraftschlüssigen Aufnahme eines Dichtmittels. Hierdurch ergibt sich der Vorteil, dass das Dichtmittel auch während des Einschubs des Rohrstopfens in die Rohrleitung gegen verrutschen bzw. gegen Verlust gesichert ist. Auch ist es denkbar, dass ein Abschnittselement durch eine Variation des auf diesem Abschnittselement angeordneten Dichtmittels für eine Verwendung mit verschiedenen Rohrleitungsdurchmessern anpassbar ist. Natürlich ist es im Rahmen der Erfindung ebenfalls denkbar, dass eine Dichtwirkung zwischen einem Abschnittselement des Rohrstopfens und einer Innenwand einer Rohrleitung unmittelbar durch das Abschnittelement hergestellt wird, ohne dass ein zusätzliches Dichtmittel verwendet wird. Hierzu ist es denkbar, dass das Abschnittselement zumindest abschnittsweise über eine elastische Außenhülle, insbesondere aus einem Elastomer, Gummi oder Kautschuk oder Silikon verfügt, welche bei Einführung des Abschnittselements gestaucht wird und somit kraftschlüssig mit der Innenwand der Rohrleitung in Kontakt gebracht wird. In diesem Zusammenhang ist es denkbar, dass die elastische Außenhülle mit einem festen Kern, insbesondere aus Kunststoff oder Metall, des Abschnittselements kombiniert wird. Hierdurch ergibt sich der Vorteil, dass der Grad der Stauchung der elastischen Außenhülle begrenzt werden kann.

Ein weiterer Vorteil der Erfindung kann darin bestehen, dass an wenigstens einem Abschnittselement zumindest abschnittsweise eine insbesondere umlaufende Fase ausgebildet ist. Die Fase kann hierbei derart angeordnet sein, dass sie bei einem Einschub des Rohrstopfens in die Rohrleitung der Rohrleitungsöffnung zugewandt ist. Der Winkel der Fase kann gegenüber der Mittelachse des Dichtkörpers bzw. des Abschnittselements in einem Bereich zwischen 45° und 85° liegen. Die Angaben beziehen sich auf Winkelgrad. In anderen Worten kann es vorgesehen sein, dass der Übergang zwischen dem Dichtabschnitt und dem Anlageabschnitt eines Abschnittselements nicht durch eine scharfe Kante, welche insbesondere durch zwei orthogonal zueinander ausgerichtete Fläche entsteht, sondern durch eine Fase gebildet wird. Hierdurch ergibt sich der Vorteil eines vereinfachten Einschubs des Rohrstopfens in die Rohrleitung sowie einer Zentrierung des Rohrstopfens während des Einschubvorgangs. Es kann vorgesehen sein, dass alle Abschnittselemente mit einer Fase versehen sind oder nur einzelne. Insbesondere kann es vorgesehen sein, dass alle Abschnittselemente bis auf ein Grundplattenelement mit einer Fase versehen sind. Es kann im Rahmen der Erfindung vorgesehen sein, dass die Fasen der Abschnittselemente derart ausgestaltet sind, dass die Kanten der Fase als Faltkanten dienen und die Abschnittselemente des Dichtkörpers über eine Faltung der Fasen ineinander verschiebbar sind, wodurch der Dichtkörper teleskopartig zusammenfaltbar bzw. auseinanderziehbar ist.

Auch ist es erfindungsgemäß möglich, dass das Griffelement einen Schaftabschnitt sowie einen Handhabungsabschnitt umfasst, wobei der Schaftabschnitt und der Handhabungsabschnitt insbesondere kraftschlüssig miteinander verbunden sind und/oder ein monolithisches Bauteil bilden. Das Griffelement des Rohrstopfens kann rotationssymmetrisch und/oder spiegelsymmetrisch ausgeführt sein. Der Handhabungsabschnitt und der Schaftabschnitt des Griffelements können orthogonal oder im Wesentlichen orthogonal zueinander ausgerichtet sein. Es kann weiterhin vorgesehen sein, dass eine Symmetrieachse des Griffelements und/oder eine Mittelachse des Schaftabschnitts des Griffelements mit der Mittelachse und/oder Rotationsachse des Dichtkörpers koaxial ausgerichtet ist, wodurch sich der Vorteil einer möglichst günstigen Kraftübertragung zwischen Griffelement und Dichtkörper sowie einer präzisen Führung des Rohrstopfens ergibt. Ein Verkippen und/oder Verkanten des Rohrstopfens beim Einführen in die Rohrleitung und/oder Herausziehen der Rohrleitung kann so effektiv vermieden werden. Der Handhabungsabschnitt des Griffelements kann durch ein stabförmiges Element mit einem kreisförmigen, quadratischen, rechteckigen, runden oder ovalen Querschnitt ausgebildet sein, wobei es sich bei der Aufzählung nicht um eine abgeschlossene Liste handelt. Insbesondere für einen runden oder ovalen Querschnitt ergibt sich ein hohes Maß an Ergonomie. Auch ist es denkbar, dass in dem Handhabungsabschnitt Ausformungen vorgesehen sind, welche insbesondere zur Platzierung von Fingern einer Hand eines Benutzers vorgesehen sind, wodurch die Ergonomie des Griffelements zusätzlich gesteigert wird. Auch ist es denkbar, dass der Handhabungsabschnitt als Scheibe, Rechteck oder Quadrat ausgebildet ist. Es ist im Rahmen der Erfindung weiterhin denkbar, dass der Schaftabschnitt und der Handhabungsabschnitt kraftschlüssig und/oder formschlüssig und/oder stoffschlüssig miteinander verbunden sind und/oder ein monolithisches, insbesondere materialeinheitliches Bauteil bilden. Es kann weiterhin vorgesehen sein, dass der Handhabungsabschnitt und/oder der Schaftabschnitt des Griffelements zumindest abschnittsweise aus Stahl gefertigt sind, wodurch sich der Vorteil einer hohen Zugfestigkeit und Verwindungssteifigkeit ergibt. In diesem Zusammenhang ist es weiterhin denkbar, dass der Schaftabschnitt und/oder der Handhabungsabschnitt mit einem Kunststoff und/oder Gummi überzogen sind, wodurch sich der Vorteil einer erhöhten Rutschfestigkeit ergibt und die Gefahr des Abrutschens insbesondere bei einem Entfernen des Rohrstopfens aus der Rohrleitung verringert wird. Auch ist es denkbar, dass der Handhabungsabschnitt und/oder der Schaftabschnitt des Griffelements bevorzugt ausschließlich aus Kunststoff hergestellt sind, wodurch sich der Vorteil eines besonders geringen Gewichts des Griffelements ergibt. Auch ist es denkbar, dass an dem Griffelement ein Innengewinde oder ein Außengewinde zur Herstellung einer Form- und Kraftschlüssigen Verbindung mit wenigstens einem Abschnittselement, insbesondere einem Grundplattenelement ausgebildet ist.

Im Rahmen der Erfindung ist es denkbar, dass das Griffelement insbesondere reversibel mit wenigstens einem der Abschnittselemente formschlüssig und/oder kraftschlüssig verbunden ist oder das Griffelement mit wenigstens einem der Abschnittselemente stoffschlüssig verbunden ist und/oder ein monolithisches Bauteil ausbildet. Durch eine reversible Verbindung des Griffelements mit wenigstens einem Abschnittselement wird der Vorteil einer modularen und platzsparenden Aufbewahrung des Rohrstopfens realisiert. Auch kann das Griffelement nach Einführung des Stopfens in eine Rohrleitung entfernt werden, um ein ungewolltes Entfernen des Stopfens aus der Rohrleitung zu verhindern. Die reversible Verbindung zwischen Griffelement und Abschnittselement kann durch eine formschlüssige und/oder kraftschlüssige Verbindung hergestellt werden. Hierbei kann es sich bevorzugt um eine Schraubverbindung oder eine Rastverbindung handeln. Bilden das Griffelement und wenigstens ein Abschnittselement hingegen ein monolithisches Bauteil aus, so ergibt sich der Vorteil einer schnelleren und unkomplizierten Verwendbarkeit des Rohrstopfens sowie einer verringerten Verlustgefahr von Einzelteilen.

Im Rahmen der Erfindung kann es sich als vorteilhaft erweisen, wenn wenigstens ein Abschnittselement und/oder das Griffelement des Rohrstopfens zumindest teilweise aus Kunststoff, insbesondere einem Silikon und/oder Elastomer und/oder einem Thermoplast hergestellt ist. Hierdurch ergibt sich der Vorteil einer kostengünstigen und einfachen Fertigung, des Dichtkörpers insbesondere im Spritzgussverfahren.

Zudem wird die obenstehende Aufgabe gelöst durch ein Rohrleitungssystem, welches wenigstens eine Rohrleitung umfasst, wobei in wenigstens eine Öffnung der Rohrleitung ein erfindungsgemäßer Rohrstopfen eingeführt ist, um die Rohrleitung an der Öffnung gegenüber der Umgebung abzudichten und den Eintrag von Fremdstoffen in die Rohrleitung sowie das Entweichen störender Gerüche aus der Rohrleitung zu vermeiden. Hierzu ist es denkbar, dass wenigstens ein Abschnittselement des Rohrstopfens insbesondere über einen Dichtabschnitt des Abschnittselements zumindest abschnittsweise, insbesondere vollumfänglich mit einer Innenfläche der Rohrleitung in Kontakt steht. Ebenfalls ist es denkbar, dass wenigstens ein anderes Abschnittselement des Rohrstopfens insbesondere über einen Anlageabschnitt des Abschnittselements zumindest abschnittsweise, insbesondere vollumfänglich mit einer Innenfläche und/oder einer Außenfläche und/oder einer Querschnittsfläche der Rohrleitung in Kontakt steht.

Eine vorteilhafte Weiterbildung der Erfindung kann darin bestehen, dass die wenigstens eine Rohrleitung in Bezug auf ihren äußeren und/oder inneren Umfang und/oder äußeren und/oder inneren Durchmesser kleiner ist als wenigstens eins der Abschnittselemente des Dichtkörpers des Rohrstopfens.

Zusätzlich wird die obenstehende Aufgabe gelöst durch ein Verfahren zur Verwendung eines Rohrstopfens mit einer Rohrleitung, wobei die folgenden Schritte durchgeführt werden:
a) Koaxiale Ausrichtung eines Rohrstopfens mit einer Rohrleitung bzw. einer Rohrleitungsöffnung in Bezug auf die Mittelachse und/oder Rotationsachse von Rohrleitung und Rohrstopfen.
b) Einführen des Rohrstopfens in die Rohrleitung bzw. Rohrleitungsöffnung, insbesondere derart, dass der Dichtkörper des Rohrstopfens, insbesondere ein Abschnittselement des Dichtkörpers, bevorzugt vollumfänglich mittelbar oder unmittelbar mit einer Innenfläche und/oder einer Außenfläche und/oder einer Querschnittsfläche der Rohrleitung in Kontakt gebracht wird, um eine Dichtwirkung zu erzielen
c) Optional: Entfernen des Rohrstopfens aus der Rohrleitung (wenn ein Verschließen der Rohrleitung nicht mehr erforderlich ist)

Hierbei ist es im Rahmen der Erfindung denkbar, dass das Verfahren für wenigstens eine zweite Rohrleitung wiederholt wird, wobei sich die zweite Rohrleitung in Bezug auf ihren Durchmesser und/oder insbesondere äußeren und/oder inneren Umfang von der ersten Rohrleitung unterscheidet und insbesondere zwischen den einzelnen Durchführungen des Verfahrens keine, insbesondere geometrische, Veränderung (also kein Umbau) des Rohrstopfens erfolgt.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Dabei ist die Erfindung gezeigt in:
- Figur 1: eine schematische Darstellung einer Seitenansicht sowie eine Frontalansicht einer Rohrleitung,
- Figur 2: eine Seitenansicht eines erfindungsgemäßen Rohrstopfens gemäß einer ersten Ausführungsform sowie einer Rohrleitung,
- Figur 3: eine Seitenansicht eines erfindungsgemäßen Rohrstopfens gemäß einer ersten Ausführungsform sowie einer ersten Rohrleitung und einer zweiten Rohrleitung,
- Figur 4: eine Seitenansicht eines erfindungsgemäßen Rohrstopfens gemäß einer zweiten Ausführungsform sowie einer Rohrleitung,
- Figur 5: eine Seitenansicht eines erfindungsgemäßen Rohrstopfens gemäß einer dritten Ausführungsform und
- Figur 6: ein Verfahren zur Verwendung eines erfindungsgemäßen Rohrstopfens mit einer Rohrleitung.

In den nachfolgenden Figuren sowie deren Beschreibung werden für die gleichen technischen Merkmale auch von unterschiedlichen Ausführungsbeispielen der Erfindung die identischen Bezugszeichen verwendet.

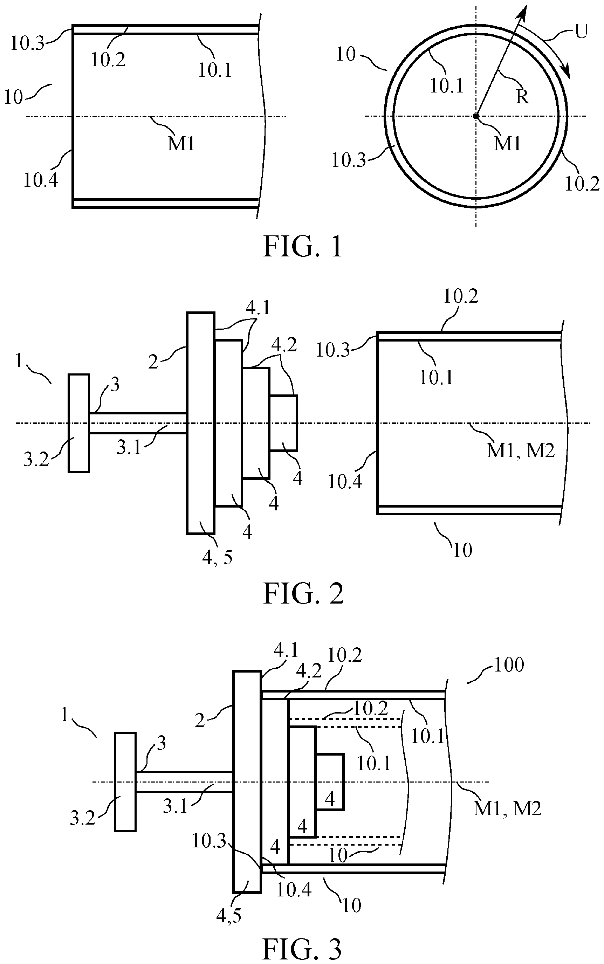

Fig. 1 zeigt auf der linken Seite eine schematische Seitenansicht einer Rohrleitung 10, wobei sich die Rohrleitung 10 vereinfachend linear und ohne Bögen bzw. Windungen erstreckt. Die Rohrleitung 10 verfügt über eine Innenfläche 10.1 sowie über eine Außenfläche 10.2. Innenfläche 10.1 und Außenfläche 10.2 der Rohrleitung 10 begrenzen die Dicke bzw. Materialstärke der Rohrleitung. Diese ist in der vorliegenden Abbildung über den Umfang der Rohrleitung konstant, kann jedoch auch über den Umfang der Rohrleitung sowie entlang der axialen Erstreckung der Rohrleitung variabel sein. An wenigstens einem Ende verfügt die Rohrleitung über eine Öffnung 10.4, an welcher die Rohrleitung 10 gegenüber der Umgebung geöffnet ist. Die Rohrleitung ist rotationssymmetrisch in Bezug auf die Rotationsachse bzw. Mittelachse M1. Weiterhin zeigt Fig. 1 auf der linken Seite die Frontalansicht auf eine Öffnung 10.4 einer Rohrleitung 10. Die Blickrichtung dieser Frontalansicht ist orthogonal zu der zuvor beschriebenen Seitenansicht der Rohrleitung 10 ausgerichtet und entspricht somit der Draufsicht auf eine Querschnittsebene der Rohrleitung In der Frontalansicht ist eine kreisförmige Innenkontur sowie eine kreisförmige Außenkontur der Rohrleitung zu sehen. Die Differenz der Radialkoordinaten in Bezug auf die Radialrichtung R von Außenkontur und Innenkontur der Rohrleitung 10 an einer definierten Umfangsposition entlang der Umfangsrichtung U bildet die Materialstärke der Rohrleitung ab. Die Aneinanderreihung der Innenkonturen aller denkbaren Querschnittsflächen der Rohrleitung 10 ergibt die Innenfläche 10.1 der Rohrleitung 10. Die Aneinanderreihung der Außenkonturen aller denkbaren Querschnittsflächen der Rohrleitung 10 ergibt die Außenfläche 10.2 der Rohrleitung 10. Bei der Öffnung 10.4 der Rohrleitung 10 handelt es sich um eine Öffnung 10.4, die mit einem erfindungsgemäßen Stopfen gegenüber der Umgebung abdichtbar ist.

Fig. 2 zeigt eine Seitenansicht eines erfindungsgemäßen Rohrstopfens 1 zur Abdichtung einer Rohrleitung 10. Im vorliegenden Ausführungsbeispiel sind sowohl der Rohrstopfen 1 als auch die Rohrleitung 10 rotationssymmetrisch ausgeführt. Die Mittelachse M2 des Rohrstopfens 1 ist koaxial mit der Mittelachse M1 der Rohrleitung ausgerichtet, sodass der Rohrstopfen 1 in die Rohrleitung 10 eingeführt werden kann. Der Rohrstopfen umfasst einen Dichtkörper 2 zur Herstellung einer Dichtwirkung bei Einführung des Rohrstopfens 1 in die Öffnung 10.4 einer Rohrleitung 10 sowie ein Griffelement 3 zur vereinfachten Handhabung des Rohrstopfens 1. Der Dichtkörper 2 des Rohrstopfens 1 umfasst mehrere Abschnittselementen 4, welche in Bezug auf ihren Durchmesser und/oder insbesondere äußeren Umfang unterschiedlich groß sind. Das in Bezug auf den Durchmesser und/oder insbesondere äußeren Umfang der Abschnittselemente 4 größte Abschnittselement 4 ist am wenigsten beabstandet vom Griffelement 3 angeordnet. Weiterhin sind alle Abschnittselemente, ausgehend von dem größten Abschnittselement, in einer bezogen auf den Durchmesser und/oder insbesondere äußeren Umfang absteigenden Reihenfolge angeordnet. Hierdurch ist der Rohrstopfen 1 zum Abdichten von mehreren Rohrleitungen 10 mit unterschiedlichen Durchmessern direkt verwendbar, ohne dass ein Umbau oder eine sonstige geometrische Veränderung des Rohrstopfens erfolgen muss.

Fig. 3 zeigt hierzu einen erfindungsgemäßen Rohrstopfen, wie er in eine Rohrleitung 10 eingeführt ist. Durch den Dichtkörper 2 des Rohrstopfens wird eine Dichtwirkung zwischen dem Rohrstopfen 1 und der Rohrleitung 10 hergestellt. Hierzu steht der Dichtkörper 2 über ein Abschnittselement 4 vollumfänglich in Kontakt mit einer Innenfläche 10.1 sowie einer Querschnittsfläche 10.3 einer Rohrleitung, wodurch die Rohrleitung gegenüber der Umgebung abgedichtet wird und somit vor dem Eintrag von Fremdstoffen geschützt wird. Auch der Austritt von störenden Gerüchen wird auf diese Weise verhindert. Schematisch ist in Fig. 3 weiterhin eine zweite Rohrleitung 10 durch gestrichelte Linien angedeutet. Diese Rohrleitung 10 ist in ihrem Durchmesser und/oder Umfang von der ersten Rohrleitung 10 verschieden. In diese zweite Rohrleitung 10 könnte der Rohrstopfen 1 aufgrund der geometrischen Ausgestaltung des Dichtkörpers 2 ebenfalls eingeführt werden, wobei jedoch die Dichtwirkung in Bezug auf die Innenfläche der Rohrleitungen 10 durch ein im Vergleich zur ersten Rohrleitung 10 verschiedenes Abschnittselement 4 erzielt wird. Durch die Ausgestaltung des Dichtkörpers 2 in der Form mehrerer Abschnittselemente 4 unterschiedlicher Größe ergibt sich somit der Vorteil, dass ein einziger Rohrstopfen 1 in Verbindung mit verschiedenen Rohrleitungen verwendbar ist, wobei die durch das Einführen des Rohrstopfens 1 in die Öffnung 10.4 einer Rohrleitung 10 stets zu einer Abdichtung gleicher Qualität führt.

Bei einem Rohrstopfen gemäß der Figuren 2 und 3 sind die Abschnittselemente 4 scheibenförmig ausgeführt und verfügen über einen konstanten Durchmesser. Diese Angabe bezieht sich zumindest auf die äußere Hülle der Abschnittselemente. Die Abschnittselemente können aus vollmaterial gefertigt sein oder innen hohl sowie zu wenigstens einer Seite, bevorzugt in Richtung eines anderen Abschnittselements geöffnet sein. Die Abschnittselemente 4 sind in Bezug auf ihre Mittelachse M2 koaxial angeordnet, was aufgrund der unterschiedlichen Durchmesser der Abschnittselemente 4 zu einem treppenförmigen Querschnitt des Dichtkörpers führt. Hierdurch ergibt sich der Vorteil, dass jedes Abschnittselement insbesondere in Bezug auf seine Außenkontur geometrisch komplementär zu einem äquivalenten Rohrleitungsdurchmesser ist, für den das jeweilige Abschnittselement 4 folglich eine Dichtwirkung bereitstellen kann.

Das Griffelement 3 des Rohrstopfens 1 ist an dem in Bezug auf den Durchmesser und/oder Umfang der Abschnittselemente 4 größten Abschnittselement 4 angeordnet. Gemäß Fig. 3 verbleibt das Griffelement 3 bei einer Einführung des Rohrstopfens 1 in eine Rohrleitung 10 vollständig außerhalb dieser Rohrleitung. Hierdurch ergibt sich der Vorteil, dass das Griffelement für einen Benutzer stets gut erreichbar bleibt und der Rohrstopfen 1 somit einfach und unproblematisch von dem Benutzer aus der Rohrleitung entfernt werden kann bzw. in diese eingeführt werden kann.

Aus Fig. 2 und Fig. 3 wird ersichtlich, dass ein Abschnittselement 4 des Rohrstopfens 1 in Bezug auf seinen Umfang und/oder Durchmesser größer ist als die Rohrleitung 10. Dieses Abschnittselement kann folglich bei einem Einschub des Rohrstopfens 1 in die Rohrleitung 10 nicht in diese eingeführt werden. Somit ergibt sich durch dieses Abschnittselement eine maximale Einschubtiefe. Diese Einschubtiefe kann bei der Verwendung des Rohrstopfens 1 für Rohrleitungen 10 verschiedener Durchmesser aufgrund der unterschiedlichen Abmessungen der Abschnittselemente 4 variieren. Die maximale Einschubtiefe des Rohrstopfens beim Einführen des Rohrstopfens 1 in eine Rohrleitung 10 wird dadurch erreicht, dass ein Anlageabschnitt 4.1 eines Abschnittselements 4 auf dem Rand der Rohrleitung 10 zum aufliegen kommt. Hierdurch wird der Vorteil erzielt, dass ein ungewolltes Abrutschen des Rohrstopfens 1 in die Rohrleitung 10 effektiv vermieden wird. Gemäß der geometrischen Ausgestaltung des Dichtkörpers 2 ergibt es sich, dass stets dasjenige Abschnittselement 4 einen mit seinem Anlageabschnitt 4.1 auf der Rohrleitung zum Aufliegen kommt, welches aus der Gruppe der Abschnittselemente, welche in Bezug auf Umfang und/oder Durchmesser größer sind als die Rohrleitung, das kleinste ist.

Der Anlageabschnitt 4.1 eines Abschnittselements wird gemäß Fig. 3 durch eine Außenfläche des Abschnittselements 4 ausgebildet. Bei einem Einschub des Rohrstopfens 1 in eine Rohrleitung 10 ist der Anlageabschnitt 4.1 orthogonal zu der Innenfläche 10.1 und der Außenfläche 10.2 der Rohrleitung ausgerichtet sowie parallel zu der Auflagefläche bzw. Querschnittsfläche 10.3 der Rohrleitung 10 ausgerichtet, wodurch der Anlageabschnitt möglichst großflächig auf der Querschnittsfläche der Rohrleitung zum aufliegen kommt und eine besonders gute Dichtwirkung erzielt wird. Die radiale Erstreckung des Anlageabschnitts, also seine Erstreckung in radialer Richtung R ist über den gesamten Umfang der Rohrleitung 10 größer als die radiale Erstreckung der Querschnittsfläche 10.3 und somit größer als die Materialstärke der Rohrleitung.

Bei einer Einführung des Rohrstopfens 1 in die Rohrleitung 10 wird gemäß Fig. 3 weiterhin ein Dichtabschnitt 4.2 eines Abschnittselements vollumfänglich in Kontakt mit der Innenfläche 10.1 der Rohrleitung 10 gebracht. Zwischen dem Dichtabschnitt 4.2 und der Rohrleitung 10 entsteht hierbei ein flächiger Kontakt, wodurch eine besonders hohe Dichtwirkung erzielt wird. Der Dichtabschnitt 4.2 wird durch eine Außenfläche des Abschnittselements 4 gebildet, welche bei Einschub des Rohrstopfens 1 in die Rohrleitung 10 parallel zu der Innenfläche der Rohrleitung ausgerichtet ist. Bei Einführung des Rohrstopfens 1 in die Rohrleitung 10 stellt somit ein Abschnittselement eine Dichtfunktion über einen Dichtabschnitt 4.2 bereit, während ein anderes, insbesondere benachbartes und in Bezug auf den Durchmesser und/oder Umfang der Abschnittselemente 4 größeres Abschnittselement 4 eine weitere Dichtfunktion über einen Anlageabschnitt 4.1 bereitstellt. Hierbei sind Anlageabschnitt 4.1 und Dichtabschnitt 4.2 der beiden Abschnittselemente 4 orthogonal zueinander ausgerichtet.

Das in Bezug auf den Durchmesser und/oder insbesondere äußeren Umfang der Abschnittselemente 4 größte Abschnittselement 4 ist gemäß Fig. 2 und Fig. 3 als ein Grundplattenelement 5 ausgestaltet. Das Grundplattenelement 5 ist benachbart zu dem Griffelement 3 des Rohrstopfens 1 angeordnet und mit diesem kraftschlüssig und/oder formschlüssig und/oder stoffschlüssig verbunden. Hierbei können das Grundplattenelement 5 und das Griffelement 3 ein monolithisches Bauteil bilden. Das Grundplattenelement 5 ist aus einem von den anderen Abschnittselementen 4 verschiedenen, insbesondere härteren Material gefertigt.

In Bezug auf den in Fig. 2 und Fig. 3 dargestellten Rohrstopfen sind alle Abschnittselemente 4 koaxial angeordnet, sodass die Mittelachse aller Abschnittselemente 4 zu einer gemeinsamen Mittelachse M2 zusammenfällt. Hierdurch ergibt sich der Vorteil, dass zwei Abschnittselemente 4 zeitgleich und vollumfänglich über einen Dichtabschnitt und einen Anlageabschnitt mit der Rohrleitung 10 in Kontakt gebracht werden können. Weiterhin sind alle Abschnittselemente 4 formschlüssig miteinander verbunden, sodass die Abschnittselemente 4 gemeinsam den Dichtkörper als ein monolithisches Bauteil ausbilden. Natürlich ist es ebenfalls denkbar, dass die Abschnittselemente reversibel miteinander verbunden sind und der Dichtkörper so bedarfsgerecht und modular zusammengesetzt werden kann.

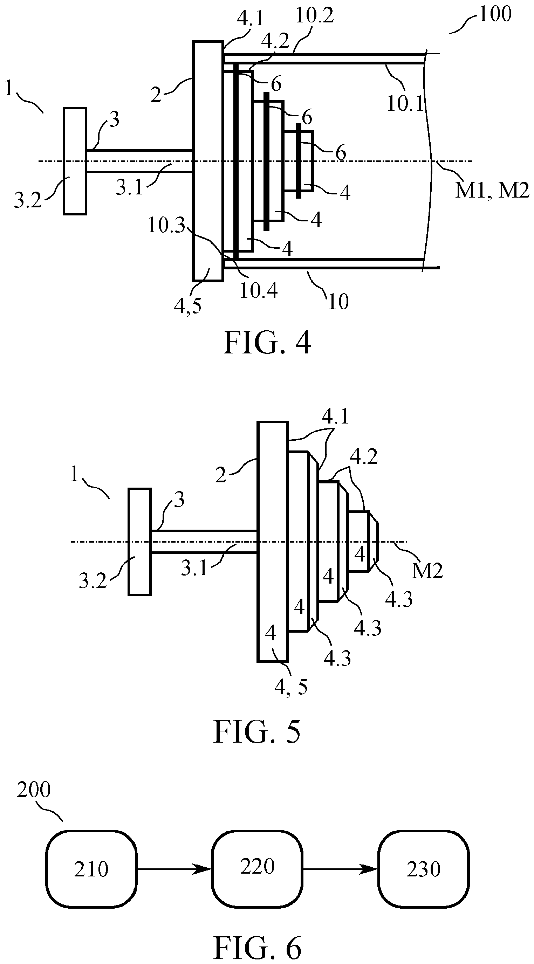

In Fig. 4 ist eine Seitenansicht auf ein weiteres Ausführungsbeispiel eines Rohrstopfens 1 gezeigt. An den Abschnittselementen 4 sind jeweils vollumfänglich zusätzliche Dichtmittel 6 angeordnet, welche als Dichtringe 6 ausgeführt sind. Hierdurch ergibt sich der Vorteil einer hohen Dichtwirkung zwischen Dichtkörper 2 und Rohrleitung 10 sowie, dass die Dichtmittel 6 bei Verschleiß einfach und kostengünstig erneuert werden können. Die Dichtabschnitt 4.2 der Abschnittselemente 4 erfüllen somit keine Dichtfunktion mehr, sondern dient als Aufnahmeabschnitt für ein Dichtmittel. Neben Dichtringen können natürlich weitere Dichtmittel wie Dichtbänder oder Dichtlamellen verwendet werden. Damit die Dichtmittel bzw. Dichtringe 6 beim Einführen des Rohrstopfens 1 in die Rohrleitung 10 nicht verrutschen, sind in den Abschnittselementen Umfangsnuten vorgesehen, in denen die Dichtmittel bzw. Dichtringe 6 formschlüssig aufgenommen sind.

Das Griffelement 3 der in den Figuren 2 bis 4 dargestellten Rohrstopfen 1 umfasst einen Schaftabschnitt 3.1 sowie einen Handhabungsabschnitt 3.2, wobei der Schaftabschnitt 3.1 und der Handhabungsabschnitt 3.2 ein monolithisches Bauteil bilden. Natürlich können Schaftabschnitt 3.1 und Handhabungsabschnitt 3.2 ebenso als separate Bauteile ausgeführt und kraftschlüssig und/oder formschlüssig und/oder stoffschlüssig miteinander verbunden sein. Der Schaftabschnitt 3.1 und der Handhabungsabschnitt 3.2 des Griffelements 3 sind rotationssymmetrisch ausgeführt und kraftschlüssig sowie reversibel mit dem in Bezug auf den Durchmesser und/oder insbesondere äußeren Umfang der Abschnittselemente größten Abschnittselement verbunden. Die Verbindung ist durch eine Schraubverbindung realisiert, wobei an dem Schaftabschnitt 3.1 des Griffelements 3 an dem Dichtkörper 2 zugewandten Ende ein Außengewinde vorgesehen ist, welches in einem in dem größten Abschnittselement 4 mittig angeordneten Innengewinde aufgenommen ist. Hierdurch ergibt sich eine optimale Kraftübertragung zwischen Griffelement 3 und Dichtkörper 2 und die Entstehung von Kippmomenten beim Einführen des Stopfens in eine Rohrleitung bzw. Herausziehen des Stopfens aus einer Rohrleitung wird vermieden. Das Griffelement ist materialeinheitlich aus Polyethylen gefertigt.

Fig. 5 zeigt ein weiteres Ausführungsbeispiel eines erfindungsgemäßen Rohrstopfens 1. An den Abschnittselementen 4 sind mit Ausnahme des Grundplattenelements 5 umlaufende Fasen 4.3 ausgebildet. Die Fasen 4.3 sind derart angeordnet, dass sie bei einem Einschub des Rohrstopfens 1 in die Rohrleitung 10 der Rohrleitungsöffnung 10.4 zugewandt sind. Somit wird der Übergang zwischen dem Dichtabschnitt 4.2 und dem Anlageabschnitt 4.1 eines Abschnittselements 4 nicht durch eine scharfe Kante, sondern eine Schräge (die Fase) gebildet. Hierdurch ergibt sich der Vorteil einer einfachen Einführung des Rohrstopfens 1 in die Rohrleitung 10, da bei einer Fehlpositionierung des Rohrstopfens 1 die Rohrleitung 10 auf der Fase 4.3 eines Abschnittselements 4 abgleitet und somit eine automatische Zentrierung des Rohrstopfens 1 in der Rohrleitung 10 erreicht wird. Es kann im Rahmen der Erfindung vorgesehen sein, dass die Fasen der Abschnittselemente derart ausgestaltet sind, dass die Kanten der Fase als Faltkanten dienen und die Abschnittselemente des Dichtkörpers über eine Faltung der Fasen ineinander verschiebbar sind, wodurch der Dichtkörper teleskopartig zusammenfaltbar bzw. auseinanderziehbar ist.

Fig. 3 und Fig. 4 zeigen jeweils auch ein erfindungsgemäßes Rohrleitungssystem 100, welches wenigstens eine Rohrleitung 10 umfasst und wobei in wenigstens einer Öffnung 10.4 der Rohrleitung 10 ein erfindungsgemäßer Rohrstopfen 1 eingeführt ist, um die Rohrleitung 10 an der Öffnung 10.4 gegenüber der Umgebung abzudichten und den Eintrag von Fremdstoffen in die Rohrleitung 10 sowie das Entweichen störender Gerüche aus der Rohrleitung 10 zu vermeiden. Hierzu steht ein Abschnittselement 4 mittelbar oder unmittelbar vollumfänglich mit der Innenfläche 10.1 der Rohrleitung 10 in Kontakt. Mit einem unmittelbaren Kontakt ist ein direkter Kontakt zwischen dem Abschnittselement 4 und der Innenfläche 10.1 der Rohrleitung 10 gemeint (Fig. 3). Mit einem mittelbaren Kontakt ist ein Kontakt über ein zusätzliches Dichtmittel gemeint, welches auf einem Abschnittselement 4 angeordnet ist und vollumfänglich mit der Innenfläche einer Rohrleitung in Kontakt steht (Fig. 4).

Die zweite Rohrleitung 10' unterscheidet sich von der ersten Rohrleitung 10 nur in ihren geometrischen Ausmaßen (Rohrdurchmesser innen und/oder außen) und ist mit einem "'" in den Ansprüchen entsprechend gekennzeichnet. Da ansonsten der erfindungsgemäße Rohrstopfen 1 bei der ersten Rohrleitung 10 technisch genauso anwendbar ist und funktioniert wie bei der zweiten Rohrleitung 10', ist auf eine zusätzliche Darstellung der zweiten Rohrleitung 10' verzichtet worden.

Fig. 6 zeigt ein Verfahren 200 zur Verwendung eines erfindungsgemäßen Rohrstopfens 1 mit einer Rohrleitung 10, wobei die folgenden Schritte durchgeführt werden:
a) Koaxiale Ausrichtung eines Rohrstopfens 1 mit einer Rohrleitung 10 bzw. einer Rohrleitungsöffnung 10.4 in Bezug auf die Mittelachse und/oder Rotationsachse M1, M2 von Rohrleitung 10 und Rohrstopfen 1 (Verfahrensschritt 210).
b) Einführen des Rohrstopfens 1 in die Rohrleitung 10 bzw. Rohrleitungsöffnung 10.4, insbesondere derart, dass der Dichtkörpers 2 des Rohrstopfens 1, insbesondere ein Abschnittselement 4 des Dichtkörpers 2, bevorzugt vollumfänglich mittelbar oder unmittelbar mit einer Innenfläche und/oder einer Außenfläche und/oder einer Querschnittsfläche der Rohrleitung in Kontakt gebracht wird um eine Dichtwirkung zu erzielen (Verfahrensschritt 220)
c) Optional: Entfernen des Rohrstopfens aus der Rohrleitung (Verfahrensschritt 230)

### Bezugszeichenliste

- 1: Rohrstopfen
- 2: Dichtkörper
- 3: Griffelement
- 3.1: Schaftabschnitt
- 3.2: Handhabungsabschnitt
- 4: Abschnittselement
- 4.1: Anlageabschnitt
- 4.2: Dichtabschnitt
- 4.3: Fase
- 5: Grundplattenelement
- 6: Dichtmittel

- 10: Rohrleitung
- 10.1: Innenfläche der Rohrleitung
- 10.2: Außenfläche der Rohrleitung
- 10.3: Querschnittsfläche der Rohrleitung
- 10.4: Öffnung der Rohrleitung

- 100: Rohrleitungssystem
- 200: Verfahren zur Verwendung eines erfindungsgemäßen Rohrstopfens
- 210: Verfahrensschritt a)
- 220: Verfahrensschritt b)
- 230: Verfahrensschritt c)

- M1: Mittelachse / Rotationsachse
- M2: Mittelachse / Rotationsachse des Dichtkörpers bzw. Rohrstopfens
- R: Radiale Richtung
- U: Umfangsrichtung

## Patentansprüche

1. Rohrstopfen (1) zum Abdichten von Rohrleitungen, insbesondere Abwasserleitungen, wobei der Rohrstopfen einen Dichtkörper (2) zur Herstellung einer Dichtwirkung bei Einführung des Rohrstopfen (1) in eine Rohrleitung (10) sowie ein Griffelement (3) zur vereinfachten Handhabung des Rohrstopfen (1) umfasst,
**dadurch gekennzeichnet,**
**dass** der Dichtkörper (2) zum Abdichten von zumindest zwei im Rohrdurchmesser unterschiedlichen Rohrleitungen (10), insbesondere direkt verwendbar ist.

2. Rohrstopfen (1) zum Abdichten von Rohrleitungen, insbesondere nach dem Oberbegriff von Anspruch 1,
**dadurch gekennzeichnet,**
**dass** der Rohrstopfen einen Dichtkörper (2) zur Herstellung einer Dichtwirkung bei Einführung des Rohrstopfen (1) in eine Rohrleitung (10) sowie ein Griffelement (3) zur vereinfachten Handhabung des Rohrstopfen (1) umfasst, wobei der Dichtkörper (2) wenigsten zwei rotationssymmetrische Abschnittselemente (4) umfasst, wobei der Außendurchmesser und/oder insbesondere äußere Umfang des ersten Abschnittselements (4) größer ist als der Durchmesser und/oder insbesondere äußere Umfang des zweiten Abschnittselements (4) und wobei sich das bezogen auf den Durchmesser und/oder insbesondere äußeren Durchmesser der Abschnittselemente (4) größte Abschnittselement (4) am wenigsten beabstandet von dem Griffelement (3) befindet und wobei alle Abschnittselemente (4), ausgehend von dem größten Abschnittselement (4), in einer bezogen auf den Durchmesser und/oder insbesondere äußeren Umfang der Abschnittselemente (4) absteigenden Reihenfolge angeordnet sind.

3. Rohrstopfen (1) nach Anspruch 1,
**dadurch gekennzeichnet,**
**dass** das in Bezug auf den Durchmesser und/oder den äußeren Umfang der Abschnittselemente (4) größte Abschnittselement (4) als ein Grundplattenelement (5) ausgestaltet ist.

4. Rohrstopfen (1) nach einem der vorhergehenden Ansprüche,
**dadurch gekennzeichnet,**
**dass** wenigstens zwei Abschnittselemente (4) insbesondere in Bezug auf ihre Mittelachse koaxial angeordnet sind.

5. Rohrstopfen (1) nach einem der vorhergehenden Ansprüche,
**dadurch gekennzeichnet,**
**dass** alle Abschnittselemente (4) jeweils mit wenigstens einem anderen Abschnittselement (4) formschlüssig und/oder kraftschlüssig, insbesondere reversibel verbunden sind.

6. Rohrstopfen (1) nach einem der vorhergehenden Ansprüche,
**dadurch gekennzeichnet,**
**dass** wenigstens zwei Abschnittselemente (4) stoffschlüssig miteinander verbunden sind und/oder ein monolithisches, insbesondere materialeinheitliches Bauteil ausbilden.

7. Rohrstopfen (1) nach einem der vorhergehenden Ansprüche,
**dadurch gekennzeichnet,**
**dass** an wenigstens einem Abschnittselement (4) ein Dichtmittel (6), vorzugsweise ein Dichtring, ein Dichtband oder eine Dichtlamelle, angeordnet ist.

8. Rohrstopfen (1) nach einem der vorhergehenden Ansprüche,
**dadurch gekennzeichnet,**
**dass** an wenigstens einem Abschnittselement (4) zumindest abschnittsweise eine insbesondere umlaufende Fase (4.3) ausgebildet ist.

9. Rohrstopfen (1) nach einem der vorhergehenden Ansprüche,
**dadurch gekennzeichnet,**
**dass** das Griffelement (3) einen Schaftabschnitt (3.1) sowie einen Handhabungsabschnitt (3.2) umfasst, wobei der Schaftabschnitt (3.1) und der Handhabungsabschnitt (3.2) insbesondere kraftschlüssig miteinander verbunden sind und/oder ein monolithisches Bauteil bilden.

10. Rohrstopfen (1) nach einem der vorhergehenden Ansprüche,
**dadurch gekennzeichnet,**
**dass** das Griffelement (3) insbesondere reversibel mit wenigstens einem der Abschnittselemente (4) formschlüssig und/oder kraftschlüssig verbunden ist oder das Griffelement (3) mit wenigstens einem der Abschnittselemente (4) stoffschlüssig verbunden ist und/oder ein monolithisches Bauteil ausbildet.

11. Rohrstopfen (1) nach einem der vorhergehenden Ansprüche,
**dadurch gekennzeichnet,**
**dass** wenigstens ein Abschnittselement (4) und/oder das Griffelement (3) zumindest teilweise aus Kunststoff, insbesondere einem Elastomer und/oder Silikon und/oder einem Thermoplast hergestellt ist.

12. Rohrleitungssystem (100) umfassend wenigstens eine Rohrleitung (10),
**dadurch gekennzeichnet,**
**dass** in wenigstens eine Öffnung (10.4) der Rohrleitung (10) ein Rohrstopfen (1) nach einem der Ansprüche 1 bis 11 eingeführt ist, um die Rohrleitung (10) an der Öffnung (10.4) gegenüber der Umgebung abzudichten.

13. Rohrleitungssystem (100) nach Anspruch 12
**dadurch gekennzeichnet,**
**dass** die wenigstens eine Rohrleitung (10) in Bezug auf ihren äußeren und/oder inneren Umfang und/oder äußeren und/oder inneren Durchmesser kleiner ist als wenigstens eins der Abschnittselemente (4) des Dichtkörpers (2) des Rohrstopfens (1).

14. Verfahren (200) zur Verwendung eines Rohrstopfens (1) mit einer Rohrleitung (10),
**dadurch gekennzeichnet,**
**dass** der Rohrstopfen (1) nach einem der Ansprüche 1 bis 11 ausgeführt ist und wenigstens die folgenden Schritte durchgeführt werden:
a) Koaxiale Ausrichtung eines Rohrstopfens (1) mit einer Rohrleitung (10) bzw. einer Rohrleitungsöffnung (10.4) in Bezug auf die Mittelachse und/oder Rotationsachse (M1, M2) von Rohrleitung (10) und Rohrstopfen (1) (Schritt 210).
b) Einführen des Rohrstopfens (1) in die Rohrleitung (10) bzw. Rohrleitungsöffnung (10.4), insbesondere derart, dass der Dichtkörpers (2) des Rohrstopfens (1), insbesondere ein Abschnittselement (4) des Dichtkörpers (2), bevorzugt vollumfänglich mittelbar oder unmittelbar mit einer Innenfläche und/oder einer Außenfläche und/oder einer Querschnittsfläche der Rohrleitung in Kontakt gebracht wird um eine Dichtwirkung zu erzielen (Schritt 220)
c) Optional: Entfernen des Rohrstopfens aus der Rohrleitung (Schritt 230)

15. Verfahren (200) nach Anspruch 14,
**dadurch gekennzeichnet,**
**dass** die Verfahrensschritte a) bis c) für wenigstens eine zweite Rohrleitung (10') wiederholt werden, wobei sich die zweite Rohrleitung (10') in Bezug auf ihren Durchmesser und/oder insbesondere äußeren und/oder inneren Umfang von der ersten Rohrleitung (10) unterscheidet und insbesondere zwischen den einzelnen Durchführungen des Verfahrens (200) keine Veränderung des Rohrstopfens (1) erfolgt.
